# EUROPEAN PATENT APPLICATION

(11) **EP 3 937 353 A1**
(43) Date of publication of application: **12.01.2022**
(21) Application number: 20772932.8
(22) Date of filing: 20.03.2020
(51) Int. Cl.: H02K 5/04

(54) **INTEGRATED ELECTRIC DRIVE ASSEMBLY AND ELECTRIC VEHICLE**

(30) Priority: 20.03.2019 CN 201910213730
(71) Applicant: Aiways Automobile (Shanghai) Co., Ltd, Jiading District Shanghai 201800 (CN)
(72) Inventor: LIU, Lantao, Shanghai 201800 (CN); NING, Xingjiang, Shanghai 201800 (CN); WU, Wei, Shanghai 201800 (CN)
(74) Representative: Manitz Finsterwald Patent- und Rechtsanwaltspartnerschaft mbB
(86) International application number: PCT/CN2020/080373
(87) International publication number: WO 2020/187314

(57) **Abstract**

An integrated electric drive assembly (100) and an electric vehicle. The electric vehicle comprises an integrated electric drive assembly (100). The integrated electric drive assembly (100) comprises: a speed regulating box (10), which is a transmission or a gearbox, a box body thereof comprising a front box body (101b) and a rear box body (101a) that match and fit each other; a motor (20) fitting the speed regulating box (10) and used for driving the speed regulating box (10), the shell of the motor (20) comprising a front end cover (211), a cylindrical housing (213), and a rear end cover (212) that are sequentially connected; and a controller (30) disposed on the speed regulating box (10) and/or the motor (20) and used for controlling the motor (20). The front end cover (211) of the motor (20) and the rear box body (101a) of the speed regulating box (10) are a common housing with an integrated structure. The common housing used by the integrated electric drive assembly (100) has the advantages of simple structure, small size, low costs, good versatility, etc., and by virtue of good universality, so that less time and lower costs are required when the model of the integrated electric drive assembly (100) is changed.

## Description

### CROSS-REFERENCE TO RELATED APPLICATION

This application claims priority to Chinese Patent Application No. 201910213730.2, entitled "INTEGRATED ELECTRIC DRIVE ASSEMBLY AND ELECTRIC VEHICLE" and filed with the Chinese Patent Office on March 20, 2019, the entire contents of which are incorporated herein by reference.

### TECHNICAL FIELD

The present application belongs to the field of electric vehicle technologies, and in particular, to an integrated electric drive assembly and an electric vehicle including the integrated electric drive assembly.

### BACKGROUND

With continuous development of the electric vehicle technologies, integrated design of an electric drive assembly has become a future development trend. Through the integrated design, on the one hand, the assembly difficulty of the electric drive assembly may be simplified, and a product yield may be improved; on the other hand, purposes of being lightweight and cost saving may be achieved.

An integrated electric drive assembly includes an electric motor, a governor box and a controller. A housing of the electric motor mainly includes a front end cover, a cylinder shell and a rear end cover sequentially connected. A box body of the governor box mainly includes a front box body and a rear box body mating and engaging with each other. In the known art, the front end cover of the electric motor, the cylinder shell of the electric motor and the rear box body of the governor box are generally combined into a common shell of an integrated structure, resulting in the following defects of the common shell. Firstly, the structure of the common shell becomes extremely complex and is required to be manufactured relying on a difficult and inefficient casting process, resulting in a significant increase in cost. Secondly, the common shell has poor universality; when a model of the integrated electric drive assembly is required to be adjusted, the common shell is required to be transformed, or at least an overall size is changed, to ensure that the common shell with the cylinder shell can match a rotor and a stator after transformation. Thirdly, in order to ensure stability and reliability of the electric motor during motion, heat dissipation is generally required, but it is difficult to construct a cooling channel for dissipating heat in the common shell; even if the cooling channel can be constructed therein, higher costs are still needed.

### SUMMARY

In order to solve all or some of the above problems, an objective of the present application is to provide an integrated electric drive assembly and an electric vehicle including the integrated electric drive assembly. The common shell used therein has the advantages of a simple structure, a small volume, low costs, good versatility, and the like. With good versatility, the integrated electric drive assembly needs less time and lower costs when a model is changed.

According to a first aspect of the present application, an integrated electric drive assembly is provided, including: a governor box, the governor box being a gearbox or a reduction box, a box body thereof including a front box body and a rear box body mating and engaging with each other; an electric motor engaging with the governor box, configured to drive the governor box, a housing of the electric motor including a front end cover, a cylinder shell and a rear end cover sequentially connected; and a controller arranged on the governor box and/or the electric motor, configured to control the electric motor. The front end cover of the electric motor and the rear box body of the governor box are a common shell of an integrated structure.

According to a second aspect of the present application, an electric vehicle is provided, including the integrated electric drive assembly described above.

The common shell used in the integrated electric drive assembly according to the present application only combines the front end cover of the electric motor and the rear box body of the governor box as a whole, and does not combine the cylinder shell of the electric motor in the common shell like the prior art, which not only simplifies the structure of the common shell, but also reduces the manufacturing difficulty and costs and improves the universality of the common shell. Just due to the good universality of the common shell, the integrated electric drive assembly of the present application achieves the following effects. When matching different levels of electric vehicles, both the known integrated electric drive assembly and the integrated electric drive assembly of the present application are intended to adjust a product model so as to change an overall size and output power. However, the former not only is required to transform the rotor and the stator, but also is required to transform the common shell which is difficult to manufacture and costly, so as to ensure that the common shell with the cylinder shell can match a rotor and a stator after adjustment, while the latter can match the rotor and the stator after transformation with the cylinder shell at low transformation costs, without a need to re-transform the high-cost common shell. Therefore, the integrated electric drive assembly of the present application needs less time and lower costs when the model is changed.

In the integrated electric drive assembly of the present application, the cylinder shell of the electric motor is not combined into the common shell, so that the cooling channel of the electric motor is easier to be constructed in the cylinder shell, which helps reduce manufacturing costs of the cooling channel. When the cooling channel is formed by a first diversion trench, a second diversion trench and an axial through hole, a coolant from the outside can smoothly enter the cooling channel, and flow continuously in the cylinder shell, the front end cover and the rear end cover thereof, so that the coolant can not only absorb heat generated by the electric motor in the cylinder shell, but also absorb heat generated by the electric motor in the front end cover and the rear end cover, to enable the housing of the electric motor to utilize the coolant to dissipate heat from the electric motor more efficiently, so as to provide a more secure guarantee for efficient and stable operation of the electric motor.

At the same time, the integrated electric drive assembly of the present application has a simple structure and a small volume, is easy to manufacture, is safe and reliable in use, and is convenient for implementation, popularization and application.

### BRIEF DESCRIPTION OF THE DRAWINGS

By reading detailed descriptions of the following preferred implementations, those of ordinary skill in the art may understand various other advantages and benefits. The accompanying drawings are merely intended to show objectives of the preferred implementations, but are not considered as a limitation on the present application. In addition, the same reference numeral is used to indicate the same member throughout the accompanying drawings. In the accompanying drawings:
FIG. 1 is an exploded view of an integrated electric drive assembly according to an embodiment of the present application;
FIG. 2 is a perspective view of the integrated electric drive assembly according to an embodiment of the present application;
FIG. 3 shows a common shell and a cylinder shell and a rear end cover of an electric motor of the integrated electric drive assembly according to an embodiment of the present application;
FIG. 4 shows the rear end cover of the electric motor of the integrated electric drive assembly according to an embodiment of the present application;
FIG. 5 shows the cylinder shell of the electric motor of the integrated electric drive assembly according to an embodiment of the present application;
FIG. 6 shows the common shell of the integrated electric drive assembly according to an embodiment of the present application;
FIG. 7 shows a wiring mechanism of the integrated electric drive assembly according to an embodiment of the present application;
FIG. 8 is a side view of the wiring mechanism in FIG. 7;
FIG. 9 shows the cylinder shell and a stator of the electric motor of the integrated electric drive assembly according to an embodiment of the present application;
FIG. 10 shows an internal structure of a governor box of the integrated electric drive assembly according to an embodiment of the present application;
FIG. 11 shows an input shaft and a nearby structure in the governor box of the integrated electric drive assembly according to an embodiment of the present application; and
FIG. 12 shows a bearing and a nearby structure in the governor box of the integrated electric drive assembly according to an embodiment of the present application.

### DETAILED DESCRIPTION OF THE EMBODIMENTS

Exemplary embodiments of the present disclosure are described below in more detail with reference to the accompanying drawings. Although the exemplary embodiments of the present disclosure are shown in the accompanying drawings, it should be understood that the present disclosure can be implemented in various forms, and shall not be limited by the embodiments described here. Instead, these embodiments are provided to enable the present disclosure to be more thoroughly understood and to enable the scope of the present disclosure to be fully conveyed to those skilled in the art.

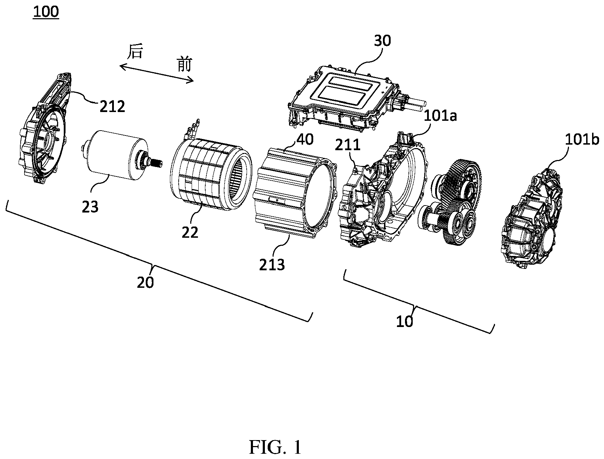

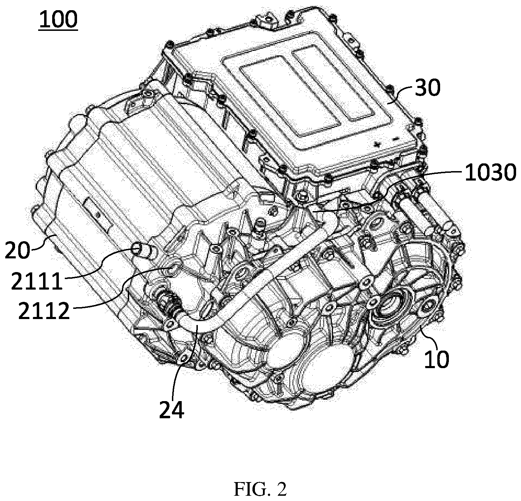

FIG. 1 is an exploded view of an integrated electric drive assembly according to an embodiment of the present application; and FIG. 2 is a perspective view of the integrated electric drive assembly according to an embodiment of the present application. As shown in FIG. 1 and FIG. 2, the integrated electric drive assembly 100 includes a governor box 10, an electric motor 20 and a controller 30. The governor box 10 refers to a gearbox or a reduction box. The electric motor 20 engages with the governor box 10 and is configured to drive the governor box 10, so that the governor box 10 can drive wheels to rotate and drive the electric vehicle to start or continue driving. The controller 30 is arranged on the governor box 10 and/or the electric motor 20 and configured to control the electric motor 20, for example, control a rotation speed, torque, and the like of the electric motor 20.

The governor box 10 includes a box body. The box body includes a front box body 101b and a rear box body 101a mating and engaging with each other. A housing of the electric motor 20 includes a front end cover 211, a cylinder shell 213 and a rear end cover 212 sequentially connected. The front end cover 211 of the electric motor 20 and the rear box body 101a of the governor box 10 are of an integrated structure, and serve as a common shell shared by the electric motor 20 and the governor box 10.

According to the embodiments of the present application, the common shell used in the integrated electric drive assembly 100 according to the present application only combines the front end cover 211 of the electric motor 20 and the rear box body 101a of the governor box 10 as a whole, and does not combine the cylinder shell of the electric motor in the common shell like the prior art, which not only simplifies the structure of the common shell, but also reduces the manufacturing difficulty and costs and improves the universality of the common shell. Just due to the good universality of the common shell, the integrated electric drive assembly 100 of the present application achieves the following effects. When matching different levels of electric vehicles, both the known integrated electric drive assembly and the integrated electric drive assembly 100 of the present application are intended to adjust a product model so as to change an overall size and output power. However, the former not only is required to transform the rotor and the stator, but also is required to transform the common shell which is difficult to manufacture and costly, so as to ensure that the common shell with the cylinder shell can match the rotor and the stator after adjustment, while the latter can match a rotor 23 and a stator 22 after transformation with the cylinder shell 213 at low transformation costs, without a need to re-transform the high-cost common shell. Therefore, the integrated electric drive assembly 100 of the present application needs less time and lower costs when the model is changed.

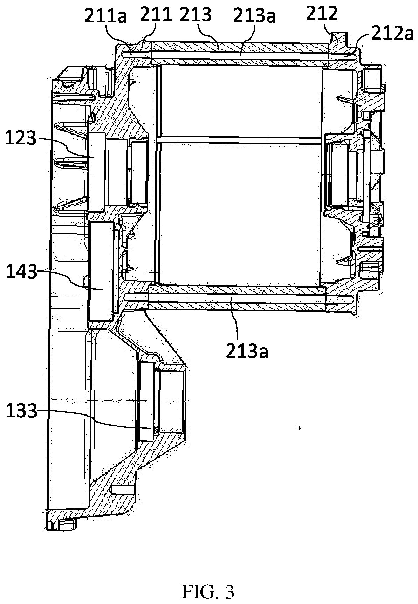

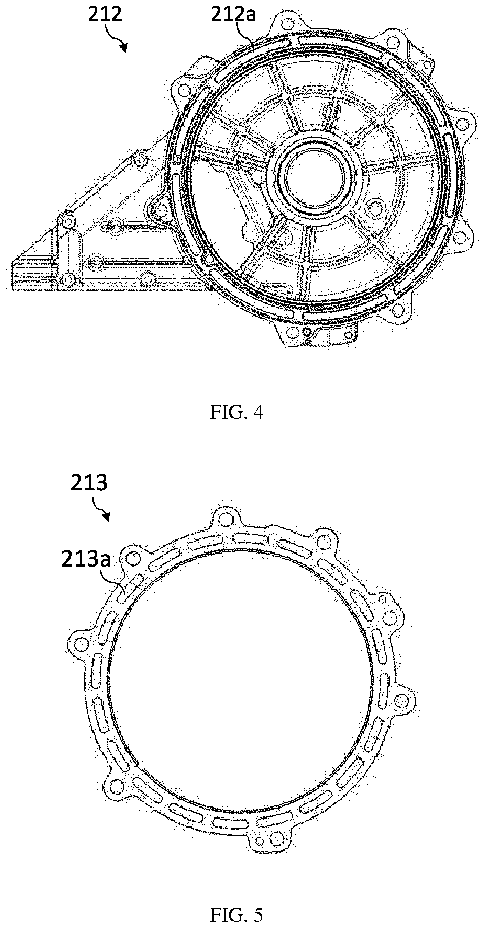

As shown in FIG. 3 to FIG. 6, the cylinder shell 213 of the electric motor 20 has axial through holes 213a circumferentially spaced apart, the front end cover 211 has first diversion trenches 211a arranged on an inner surface thereof and circumferentially spaced apart, and the rear end cover 212 has second diversion trenches 212a arranged on an inner surface thereof and circumferentially spaced apart. Two ends of the cylinder shell 213 are connected to the front end cover 211 and the rear end cover 212 respectively. The connection between the cylinder shell 213 and the front end cover 211 and the connection between the cylinder shell 213 and the rear end cover 212 are generally detachable connections such as bolted connections or clamp connections. Of course, non-detachable connections such as welding may also be selected for specific purposes. Radial sections of the first diversion trench 211a, the second diversion trench 212a and the axial through hole 213a are all circular, polygonal or the like, but hollow arcs are preferred to further improve a heat dissipation effect.

When the two ends of the cylinder shell 213 are connected to the front end cover 211 and the rear end cover 212 respectively, the first diversion trench 211a and the second diversion trench 212a are engaged with the axial through hole 301 and form a winding cooling channel in the front end cover 211, the rear end cover 212 and the cylinder shell 213. A liquid inlet 211b and a liquid outlet 211c of the cooling channel are both arranged on the front end cover 211, the rear end cover 212 or the cylinder shell 213, or respectively arranged on any two of the front end cover 211, the rear end cover 212 and the cylinder shell 213. A commuting zone of the winding cooling channel is formed by the first and second diversion trenches 211a and 212a connected to the axial through hole, so that a manufacturer can not only construct the cylinder shell 213 with the axial through hole 213a at lower costs, for example, the axial through hole 301 is directly constructed when a semi-finished cylinder shell 213 is manufactured through an extrusion process, but also construct an end cap with a diversion trench at lower costs, for example, the diversion trench is directly constructed when the end cap of the semi-finished product is manufactured through a die casting process. That is, the cooling channel in the form easily simplifies the construction difficulty of the housing, and makes the cost of the housing lower.

One or more cooling channels may be provided, but one is preferred. In this embodiment, the liquid inlet 211b and the liquid outlet 211c are arranged in the front end cover 211, N first diversion trenches 211a are provided, N+1 second diversion trenches 212a are provided, and 2N+2 axial through holes are provided, wherein the liquid inlet 211b is connected to a first axial through hole, the liquid outlet 211c is connected to a 2N+2^{th} axial through hole, an i^{th} first diversion trench 211a is configured to connect a 2i^{th} axial through hole and a 2i+1^{th} axial through hole, a j^{th} second diversion trench 212a is configured to connect a 2i-1^{th} axial through hole and the 2i^{th} axial through hole, wherein N is a positive integer greater than or equal to 2, i∈[1, N], and j∈[1, N+1]. Since a number of the guide grooves of the front end cover 211 is less than that of the guide grooves of the rear end cover 212, when the liquid inlet 211b and the liquid outlet 211c are arranged on the front end cover 211, the coolant can not only dissipate heat from the front end cover 211 when passing through the first diversion trench 211a, but also can further dissipate the heat from the front end cover 211 when passing through the liquid inlet 211b and the liquid outlet 211c, so as to enable the coolant to dissipate the heat from the front end cover 211 more evenly and efficiently, so that cooling efficiency of the coolant to the front end cover 211 and the rear end cover 212 is similar.

In the embodiment shown in FIG. 2, the integrated electric drive assembly 100 further includes a coolant delivery line 24 capable of passing through a reserved hole 1030 between the governor box 10 and the controller 30 and being connected to the liquid inlet 211b (or the liquid outlet 211c) in the front end cover 211. A portion of the coolant delivery line 24 between the reserved hole 1030 and the liquid inlet 211b (or the liquid outlet 211c) is close to the governor box 10, so as to enable the overall structure of the integrated electric drive assembly 100 to be more compact, thereby effectively preventing the coolant delivery pipe 24 from increasing a length, width or height of the integrated electric drive assembly 100.

In the embodiment shown in FIG. 2, the front end cover 211 of the electric motor 20 is provided with a first reservation joint 2111 axially extending outwards and a second reservation joint 2112 radially extending forward. One of the first and second reservation joints 2111 and 2112 is opened (for example, drilled through) and configured to connect the liquid inlet 211b or liquid outlet 211c, while the other is not opened. Since orientations of the first and second reservation joints 2111 and 2112 are different, so when the electric motor 20 is required to be assembled into a target vehicle body, an operator can selectively open one of the first and second reservation joints 2111 and 2112 and make it easier to connect a pipe body of a coolant supply system.

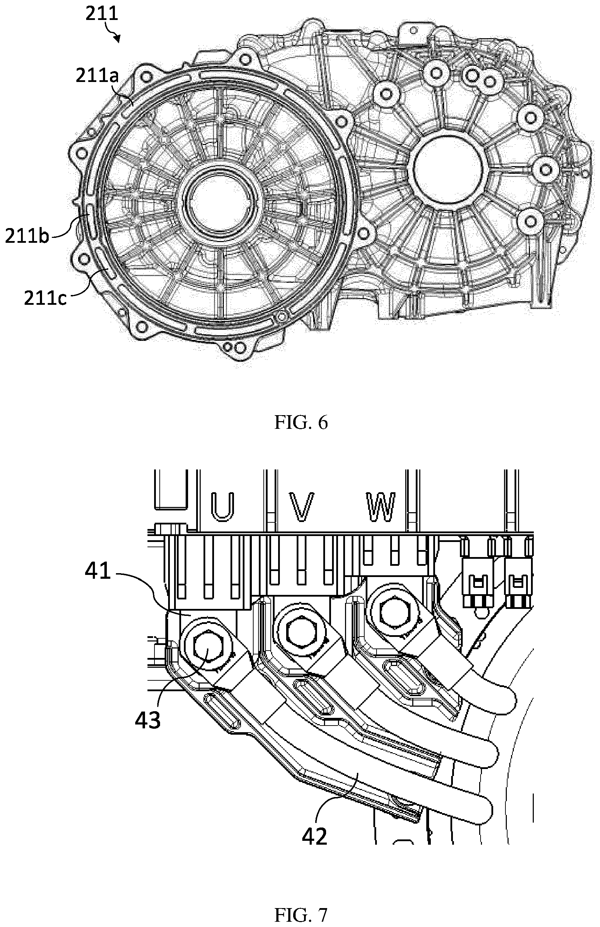

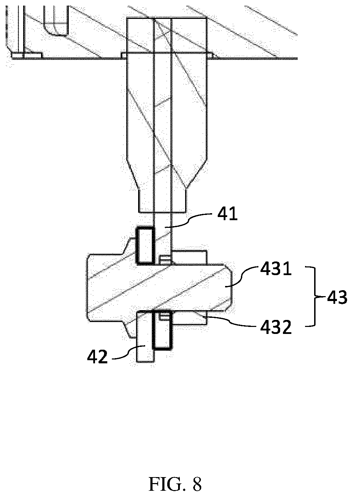

As shown in FIG. 7 and FIG. 8, the integrated electric drive assembly 100 further includes a wiring mechanism arranged in the rear end cover 212. The wiring mechanism includes a wiring copper bar 41 electrically connected to the controller 30 and a wiring terminal 42 electrically connected to the electric motor 20, and a fastening component 43 configured to connect the wiring terminal 42 and the wiring copper bar 41. The fastening component 43 includes a female fastener 432 fixedly arranged on the copper bar 41 and a male fastener 431 detachably connected to the female fastener 432 after passing through the wiring copper bar 41 and the wiring terminal 42. The combination of the female fastener 432 and the male fastener 431 may also be a nut-and-bolt assembly, a clamp assembly, a lock assembly or the like. However, in this embodiment, the female fastener 432 and the male fastener 431 are a nut and a screw respectively. In the known art, the wiring terminal and the wiring copper bar are required to be fixed to an insulating wire holder through a bolt screwed into the insulating wire holder. Once a mounting position of the insulating wire holder, a mounting position of the wiring copper bar electrically connected to the controller and mounting positions of the controller and the electric motor all have errors, and the wiring copper bar cannot be mounted in place and produce strong stress inside. In the long run, it is easy to lead to a risk of cracking at a connection between the wiring copper bar and the wire holder and a connection between the wiring copper bar and the controller. However, in this embodiment, the female fastener 432 is directly fixed to the wiring copper bar 41 to enable the wiring terminal 42 to be directly fixed to the wiring copper bar 41 through the male fastener 431, so that the male fastener 431 is no longer required to fix the wiring copper bar 41 and the wiring terminal 42 to the wire holder. In this way, strong stress inside the wiring copper bar can be effectively prevented, thereby reducing the risk of cracking at the connection between the wiring copper bar and the wire holder and the connection between the wiring copper bar and the controller.

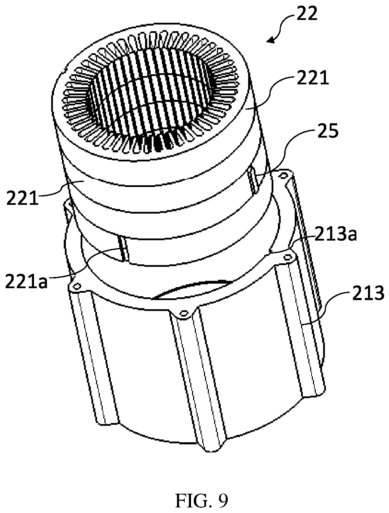

In the embodiment shown in FIG. 9, the stator 22 of the electric motor 20 includes a stator core. The stator core includes a plurality of sheet packs 221 sequentially superposed axially. A number of the sheet packs 221 is determined according to an actual requirement. However, in order to take into account the cost and thickness uniformity of the stator core, it is recommended that the number of the sheet packs 221 be four. Each of the sheet packs 221 is formed by identical circular punching sheets stacked. In the embodiment of the present application, the electric motor 20 is connected by a key to prevent rotation of the stator 22 with respect to the housing. Specifically, the electric motor 20 includes a key 25, a plurality of first keyways 221a are provided on an outer peripheral wall of the stator core, and a second keyway 213a is provided on an inner wall of the cylinder shell 213. In this way, the key 25 can be loaded into any of the first keyways 221a and then into the second keyway 213a during insertion of the stator 22 of the electric motor 20 into the cylinder shell 213, so as to prevent rotation of the stator 22 with respect to the cylinder shell 213.

In this embodiment, in order to improve the performance of the stator core while reducing manufacturing costs, a first keyway 221a is provided on an outer peripheral surface of each sheet pack 221, and the first keyway 221a is formed by splicing gaps formed at outer peripheries of the circular punching sheets and in the sheet pack 221. Each of the first keyways 221a has a different circumferential position on the stator core.

The electric motor 20 of the present application is connected by a key to prevent rotation of the stator 22 with respect to the housing. Only one keyway 111 on the stator 22 and a keyway 213a and a key 25 on the cylinder shell 213 are needed. Although other first keyways 221a on the stator 22 are not used, this can ensure that the stator core can continue to improve the thickness of the stator core like the prior art (the reason is that each first keyway 221a has a different circumferential position on the stator core) and improve the performance while reducing the manufacturing costs (the reason is that each of the sheet packs 221 is formed by identical circular punching sheets stacked). In addition, although a lower-cost key 25 is added to the electric motor 20, second keyways 213a, which have a same number as the first keyways 221a, are no longer required to be provided on the cylinder shell 213, only one second keyway 213a is required to be provided on the cylinder shell 213, and the costs can still be saved upon integrated calculation. That is, the electric motor 20 of the present application can not only reduce the thickness non-uniformity of the stator core of the stator 22 like the prior art, but also prevent rotation of the stator 22 with respect to the shell at lower costs, which provides a necessary guarantee for stable and efficient operation of the electric motor 20.

In this embodiment, the gap is preferred to be rectangular and easily machined so that the first keyway 221a is roughly cuboid-shaped. In order to enable the key 25 to fit well with the cuboid-shaped first keyway 221a while reducing the costs, the key 25 is preferably a flat key, and more preferably a lower-cost standard flat key. In order to reduce the assembly difficulty of the stator 22, the cylinder shell 213 and the key 3, an end face of the flat key is an arc surface, so as to guide the key 25 into the second keyway 213a more smoothly through the arc surface and prevent engagement of the key 25 with the second keyway 213a when the stator 22 is loaded into the cylinder shell 213.

In this embodiment, the first keyways 221a are evenly distributed along a circumferential direction of the stator core to further reduce the thickness non-uniformity of the stator core.

As shown in FIG. 3, FIG. 10 and FIG. 11, the governor box 10 includes an input shaft 121, an output shaft 131 and an intermediate shaft 141 between the two shafts arranged in the box body. A pair of bearing grooves 123, a pair of bearing grooves 133 and a pair of bearing grooves 143 are formed on an inner wall of the box body. Two ends of the input shaft 121 are mounted in the corresponding bearing grooves 123 respectively through a bearing 122. Two ends of the intermediate shaft 141 are mounted in the bearing grooves 143 through bearings 142. However, the output shaft 131 is as follows. One output shaft 131 is mounted in one bearing groove 143 through a bearing 132, the other output shaft 131 is mounted in the other bearing groove 143 through the other bearing 132, and the two output shafts 131 are connected by a differential 151 arranged in the box body. The input shaft 121 and the intermediate shaft 141 are connected by respective loaded gears, but the intermediate shaft 141 is connected by the gears to the differential 151, and each output shaft 131 is driven by the differential 151. It is worth noting that one intermediate shaft 141 is generally provided if the governor box 10 is a reducer, but more than two intermediate shafts 141 are provided if the governor box 10 is a transmission.

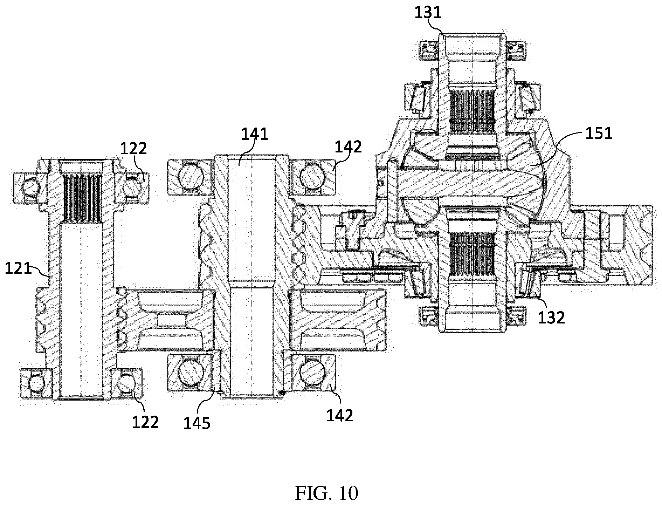

In the embodiment shown in FIG. 10, a diameter-increasing shaft sleeve 145 is provided between the intermediate shaft 141 and the bearing 142 thereof. The intermediate shaft 141 generally carries more loads than other shafts. In the prior art, larger bearings are selected to meet load requirements; however, since a shaft diameter of standard bearings is larger than that of the intermediate shaft 141, a common way is to develop special bearings, which is costly. This embodiment has the following benefits with the aid of a diameter-increasing shaft sleeve 145. One the one hand, a diameter of the intermediate shaft 141 is increased by increasing the diameter of the shaft sleeve 145, so that a larger-diameter bearing 142 may be selected for the governor box 10 in use, and the larger-diameter bearing 142 has higher bearing capacity and a longer service life, so as to effectively improve the stability of the transmission of the governor box 10. On the other hand, the arrangement of the diameter-increasing shaft sleeve 145 further enables the bearing 42 to be selected from existing products without a need to re-develop small-diameter bearings to improve the strength thereof, thereby greatly reducing the development time and production costs of the bearing 142 and then shortening development time of an item and reducing a risk of the item. In addition, the arrangement of the diameter-increasing shaft sleeve 145 can further improve local strength of the intermediate shaft 141, so as to further reduce a diameter of a bearing mounting zone, which allows a greater design freedom for the gear mounted on the intermediate shaft 1.

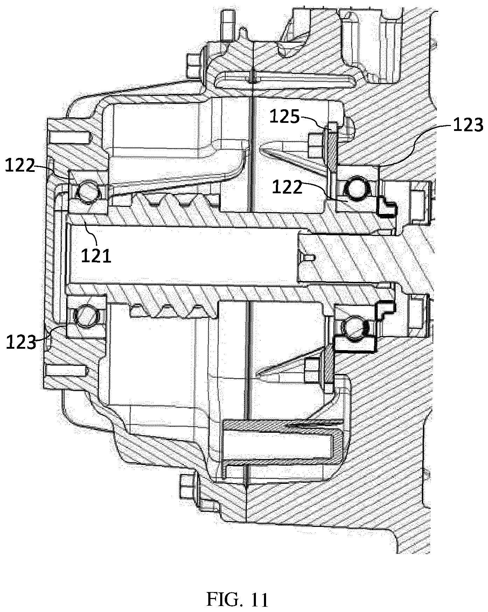

In the embodiment shown in FIG. 11, an inner wall of the box body of the governor box 10 is provided with a retaining ring 125 abutting an outer ring of a bearing and configured to prevent withdrawal of the bearing in the bearing groove from the inside thereof. The retaining ring 125 is, for example, fixed to the inner wall of the box body through a plurality of screws. It is to be noted that the bearing groove may be the bearing groove 123 for the input shaft 121, or the bearing groove 133 for the output shaft 131, or the bearing groove 143 for the intermediate shaft 141. One or more bearing grooves may be provided, which is not limited.

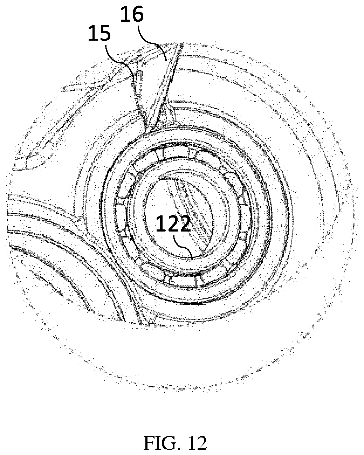

In the embodiment shown in FIG. 12, an inner wall of the box body of the governor box 10 is provided with a guide groove 15 in communication with a top of an established bearing groove, the inner wall of the box body is further provided with an oil collection rib 16, and a bottom end of the oil collection rib 16 is arranged in the guide groove 15. The established bearing groove may be the bearing groove 123 for the input shaft 121, or the bearing groove 133 for the output shaft 131, or the bearing groove 143 for the intermediate shaft 141. One or more established bearing grooves may be provided, which is not limited. When the governor box 10 starts to operate, oil is thrown to the top of the box body by internal gears thereof and flows down to the oil collection rib 16 under gravity. Then, the oil collection rib 16 directs the received oil into the guide groove 15 located therebelow, and the guide groove 15 directs the received oil into the established bearing groove located therebelow, so that the oil can enter the bearing in the established bearing groove.

In a non-illustrated embodiment, an electric vehicle is provided. The electric vehicle includes the integrated electric drive assembly 100 described in any one of the above embodiments.

In the description of the present application, it should be understood that the orientation or position relationship indicated by the terms "front", "back", "top", "bottom", "inner", "outer", "axial", "radial", "circumferential" etc. are based on the orientation or position relationship shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In the present application, unless otherwise explicitly specified and defined, the terms "mount," "communicate," "connect", "fix" and the like should be understood in a broad sense, such as, a fixed connection, a detachable connection, or an integral connection; a mechanical connection, or an electrical connection; a direct connection, an indirect connection through an intermediate medium, an internal connection of two elements, or an interaction of two elements. For those of ordinary skill in the art, the specific meanings of the foregoing terms in the present application can be understood on a case-by-case basis.

Finally, it is to be noted that, the above embodiments are merely intended to describe the technical solutions of the present application, but not to limit the present application. Although the present application is described in detail with reference to the foregoing embodiments, those of ordinary skill in the art should understand that they may still make modifications to the technical solutions described in the foregoing embodiments or make equivalent replacements to some technical features thereof. Such modifications or replacements do not cause the essence of the corresponding technical solutions to depart from the scope of the technical solutions of the embodiments of the present application, and should fall within the scope of the claims and the specification of the present application. In particular, any combination of the various technical features described in various embodiments is possible as long as no conflict in structure occurs. The present application is not limited to the specific embodiments disclosed herein, but includes all the technical solutions falling within the scope of the claims.

## Claims

1. An integrated electric drive assembly, **characterized by** comprising:
a governor box, the governor box being a gearbox or a reduction box, a box body thereof comprising a front box body and a rear box body mating and engaging with each other;
an electric motor engaging with the governor box, configured to drive the governor box, a housing of the electric motor comprising a front end cover, a cylinder shell and a rear end cover sequentially connected; and
a controller arranged on the governor box and/or the electric motor, configured to control the electric motor,
wherein the front end cover of the electric motor and the rear box body of the governor box are a common shell of an integrated structure.

2. The integrated electric drive assembly according to claim 1, wherein the cylinder shell has axial through holes circumferentially spaced apart, the front end cover has first diversion trenches circumferentially spaced apart, and the rear end cover has second diversion trenches circumferentially spaced apart; wherein when two ends of the cylinder shell are connected to the front end cover and the rear end cover respectively, the first diversion trench and the second diversion trench are engaged with the axial through hole and form at least one cooling channel in the front end cover, the rear end cover and the cylinder shell, and a liquid inlet and a liquid outlet of the cooling channel are arranged in one or two of the front end cover, the rear end cover and the cylinder shell.

3. The integrated electric drive assembly according to claim 2, wherein the liquid inlet and the liquid outlet are arranged in the front end cover, N first diversion trenches are provided, N+1 second diversion trenches are provided, and 2N+2 axial through holes are provided, wherein the liquid inlet is connected to a first axial through hole, the liquid outlet is connected to a 2N+2^{th} axial through hole, an i^{th} first diversion trench is configured to connect a 2i^{th} axial through hole and a 2i+1^{th} axial through hole, a j^{th} second diversion trench is configured to connect a 2i-1^{th} axial through hole and the 2i^{th} axial through hole, wherein N is a positive integer greater than or equal to 2, i∈[1, N], and j∈[1, N+1].

4. The integrated electric drive assembly according to any one of claims 1 to 3, further comprising a wiring mechanism arranged in the rear end cover, the wiring mechanism comprising a wiring copper bar electrically connected to the controller and a wiring terminal electrically connected to the electric motor, and a fastening component configured to connect the wiring terminal and the wiring copper bar, wherein the fastening component comprises a female fastener fixedly arranged on a body of the copper bar and a male fastener detachably connected to the female fastener after passing through the wiring copper bar and the wiring terminal.

5. The integrated electric drive assembly according to claim 4, wherein the female fastener is a nut, and the male fastener is a screw.

6. The integrated electric drive assembly according to any one of claims 1 to 3, wherein the electric motor comprises a stator and a key, the stator comprises a stator core, the stator core comprises a plurality of sheet packs sequentially superposed axially, each of the sheet packs is formed by identical circular punching sheets stacked, a first keyway is provided on an outer peripheral surface of each sheet pack, the first keyway is formed by splicing gaps formed at outer peripheries of the circular punching sheets and in the sheet pack, wherein each of the first keyways has a different circumferential position on the stator core, a second keyway is provided on an outer peripheral surface of the cylinder shell, the key is loaded into any of the first keyways and then into the second keyway during insertion of the stator of the electric motor into the cylinder shell, so as to prevent rotation of the stator with respect to the cylinder shell.

7. The integrated electric drive assembly according to any one of claims 1 to 3, wherein the governor box comprises a bearing groove formed on an inner wall of the box body, and the inner wall of the box body is provided with a retaining ring abutting an outer ring of a bearing and configured to prevent withdrawal of the bearing in the bearing groove from the inside thereof.

8. The integrated electric drive assembly according to any one of claims 1 to 3, wherein the governor box further comprises an input shaft, an output shaft and an intermediate shaft between the input shaft and the output shaft, and a diameter-increasing shaft sleeve is provided between the intermediate shaft and the bearing thereof.

9. The integrated electric drive assembly according to any one of claims 1 to 3, wherein the governor box comprises a bearing groove formed on the inside of the box body and configured to mount the bearing, an inner wall of the box body is provided with a guide groove in communication with a top of the bearing groove, the inner wall of the box body is further provided with an oil collection rib, and a bottom end of the oil collection rib is arranged in the guide groove.

10. An electric vehicle, **characterized by** comprising the integrated electric drive assembly according to any one of claims 1 to 9.
